# EUROPÄISCHE PATENTSCHRIFT

(11) **EP 4 515 168 B1**
(45) Veröffentlichungstag und Bekanntmachung des Hinweises auf die Patenterteilung: **09.12.2026**
(21) Anmeldenummer: 23722533.9
(22) Anmeldetag: 26.04.2023
(51) Int. Cl.: F28D 1/04, F28D 9/00, F28D 7/16, F28F 9/02, C01C 1/04, B01J 19/00, B01J 8/02

(54) **WÄRMETAUSCHER MIT INTEGRIERTER ANFAHRHEIZUNG**
HEAT EXCHANGER WITH INTEGRATED START-UP HEATER
ÉCHANGEUR DE CHALEUR AVEC CHAUFFAGE DE DÉMARRAGE INTÉGRÉ

(30) Priorität: 27.04.2022 DE 102022204105; 27.04.2022 BE 202205309
(43) Veröffentlichungstag der Anmeldung: 05.03.2025
(73) Patentinhaber: thyssenkrupp Uhde GmbH, 44141 Dortmund (DE); thyssenkrupp AG, 45143 Essen (DE)
(72) Erfinder: GORVAL, Evgeni, 44135 Dortmund (DE)
(86) Internationale Anmeldenummer: PCT/EP2023/060940
(87) Internationale Veröffentlichungsnummer: WO 2023/209002

(56) Entgegenhaltungen:
- GB-A- 892 460
- US-A1- 2011 123 404
- US-A1- 2019 277 578

## Beschreibung

Die Erfindung betrifft einen Wärmetauscher mit einer integrierten Heizung zur Erwärmung zum Anfahren einer Anlage.

Viele chemische Prozesse, beispielsweise und insbesondere die Synthese von Ammoniak aus Stickstoff und Wasserstoff, setzen Wärme frei, welche dazu verwendet wird, die zugeführten Edukte zu erwärmen. Somit ergibt sich aber beim Anfahren einer solchen Chemieanlage, dass am Anfang die Anlage für die Reaktion zu kalt ist und die Reaktion somit aber auch nicht die benötigte Wärme zur Verfügung stellt. Daher ist es üblich, die benötigte Energie insbesondere mittels eines Erdgasbrenners zur Verfügung zu stellen. In den meisten Fällen wird heutzutage der Wasserstoff für die Ammoniaksynthese aus Erdgas hergestellt, Erdgas ist also in solchen Anlagen verfügbar.

Zunehmend besteht aber das Interesse, die CO₂-Emissionen zu verringern. Daher wird nach alternativen Quellen für Wasserstoff gesucht, welche ohne die Erzeugung von CO₂ auskommen. Eine Quelle ist zum Beispiel die Elektrolyse mittels regenerativ erzeugtem Strom. Dieses führt aber dazu, dass Erdgas nicht mehr unbedingt zum Beispiel für den Anfahrprozess zur Verfügung steht. Zum anderen soll auch bei solchen Prozessen dann auf die Emission von CO₂ verzichtet werden. Es ergibt sich daher die Notwendigkeit, die Edukte anders aufzuheizen, um auf die für die Reaktion notwendige Mindesttemperatur im Katalysatorbett zu kommen.

Derzeit kommen dazu insbesondere zwei Lösungen zum Einsatz. Zum einen wird eine elektrische Vorheizung zwischen den Wärmetauscher und den Konverter gebaut. Da im Rezirkulationskreis der Ammoniaksynthese aber Drücke weit über 100 bar (bis zu 400 bar) vorherrschen, muss das Gehäuse für die elektrische Vorheizung entsprechend stabil und damit aufwändig und teuer sein. Zum anderen wird die Vorheizung direkt in den Konverter integriert. Damit entfällt zwar die Notwendigkeit eines eigenen Gehäuses, der Platzbedarf reduziert jedoch die Menge des Katalysators im Konverter und reduziert damit die maximale Produktionsleistung.

Aus der US 2019/277578 A1 ist eine kassettenartig ausgebildete elektrische Widerstandsheizung zum Vorwärmen von Batterien von Elektrofahrzeugen und Hybridfahrzeugen bekannt, welche nur in einem begrenzten Temperaturbereich geladen und entladen werden sollten, um eine Beschädigung der Batterien zu vermeiden.

Aus der EP 2 116 296 A1 ist eine Anfahrheizung für einen Ammoniakreaktor bekannt.

Aus der DE 10 2019 202 893 A1 ist ein Verfahren zur Herstellung von Ammoniak bekannt.

Aus der EP 3 623 343 A1 ist ein Verfahren zur Herstellung von Ammoniak bekannt.

Aus der WO 2017 / 186 613 A1 ist ein Verfahren zum Anheizen eines Ammoniak-Konverters bekannt.

Aus der EP 3 730 456 A1 ist die Verwendung erneuerbarer Energien für die Ammoniaksynthese bekannt.

Aus der CN 107188197 A ist ein Verfahren zur Verwendung von Stickstoff zum Aufheizen eines Ammoniaksynthesekatalysators bekannt.

Aus der WO 2020 / 150 245 A1 ist die Verwendung erneuerbarer Energie zur Synthese von Ammoniak bekannt.

Aufgabe der Erfindung ist es, eine regenerative Vorwärmung, insbesondere bei der Ammoniaksynthese, zu ermöglichen, welche die Probleme der beiden bekannten Lösungen vermeidet.

Gelöst wird diese Aufgabe durch einen Ammoniaksynthese-Gas-Gas-Wärmetauscher mit den in Anspruch 1 angegebenen Merkmalen, die Chemieanlage mit den in Anspruch 12 angegebenen Merkmalen sowie das Verfahren mit den in Anspruch 15 angegebenen Merkmalen. Vorteilhafte Weiterbildungen ergeben sich aus den Unteransprüchen, der nachfolgenden Beschreibung sowie den Zeichnungen.

Bei einem Wärmetauscher (Wärmeaustauscher, Wärmeübertrager) handelt es sich insbesondere um eine Vorrichtung, in welcher thermische Energie von einem Stoffstrom auf einen anderen Stoffstrom übertragen wird, wobei die Stoffströme aus dem Wärmetauscher voneinander getrennt herausgeführt werden. Damit wird in einem Wärmetauscher also ein zugeführter Stoffstrom erwärmt und ein anderer zugeführter Stoffstrom abgekühlt. Im Falle trennbarer Stoffströme (beispielsweise einer Flüssigkeit, deren Dampfdruck in dem entsprechenden Temperaturbereich den Umgebungsdruck nicht übersteigt, und einem Gas, das in dieser Flüssigkeit nicht lösbar ist) können die Stoffströme im Wärmetauscher temporär für eine direkte Wärmeübertragung miteinander vermischt werden. Im Falle nicht trennbarer Stoffströme werden diese im Wärmetauscher durch eine wärmedurchlässige Wand räumlich voneinander getrennt geführt (Rekuperator). Bei einem Gas-Gas-Wärmetauscher sind beide Stoffströme Gase. Gase sind in der Regel nicht ohne weiteres voneinander trennbar, weshalb diese dann räumlich voneinander getrennt durch den Wärmetauscher geleitet werden.

Der erfindungsgemäße Ammoniaksynthese-Gas-Gas-Wärmetauscher weist eine erste Gasseite und eine zweite Gasseite auf. Als "Gasseite" wird hier insbesondere ein Bereich (Hohlbereich) bezeichnet, durch welchen ein Gas hindurchgeleitet wird (hindurchströmt). Im Regelbetrieb wird von dem durch die zweite Gasseite strömendem Gas thermische Energie im Gas-Gas-Wärmetauscher auf das in der ersten Gasseite strömende Gas übertragen. Insbesondere wird die bei der Umsetzung des Gases erzeugte Wärme zur Erwärmung der zuströmenden Edukte verwendet. Die erste Gasseite weist einen ersten Gaseinlass und einen ersten Gasauslass auf. Als "Gaseinlass" wird hier insbesondere eine Eingangsöffnung oder ein Eingangsbereich einer Gasseite bezeichnet, durch welche oder welchen ein Gas in die jeweilige Gasseite des Gas-Gas-Wärmetauschers eintritt. Als "Gasauslass" wird hier insbesondere eine Ausgangsöffnung oder ein Ausgangsbereich bezeichnet, durch welche oder welchen ein Gas aus der jeweiligen Gasseite des Gas-Gas-Wärmetauschers austritt. Am ersten Gaseinlass wird der zu erwärmende Gasstrom der ersten Gasseite zugeführt und der erwärmte Gasstrom dann am Gasauslass wieder abgegeben. Die zweite Gasseite weist entsprechend einen zweiten Gaseinlass und einen zweiten Gasauslass auf. Durch den zweiten Gaseinlass wird das Gas eingeleitet, welches Wärme abgegeben soll und verlässt den Gas-Gas-Wärmetauscher abgekühlt durch den zweiten Gasauslass. Die erste Gasseite weist einen mit dem ersten Gaseinlass verbundenen ersten Gasverteilbereich und einen mit dem ersten Gasauslass verbundenen ersten Gassammelbereich auf. Der erste Gasverteilbereich und der erste Gassammelbereich sind über eine Mehrzahl an ersten Wärmetauschgasführungen miteinander verbunden. Als "Wärmetauschgasführung" wird hier insbesondere ein Bereich bezeichnet, durch welchen das Gas in der jeweiligen Gasseite des Gas-Gas-Wärmetauschers hindurchgeleitet wird (hindurchströmt), wobei von dem Gas in dieser Gasseite thermische Energie auf das Gas in der jeweils anderen Gasseite übertragen wird. Die Wärmetauschgasführungen können beispielsweise und bevorzugt plattenförmig oder rohrförmig ausgestaltet sein. Als "Gasverteilbereich" wird hier insbesondere ein Bereich (Eintrittsport) bezeichnet, in welchem das in die jeweilige Gasseite des Gas-Gas-Wärmetauschers eingetretene Gas verteilt wird, bevor es in die Wärmetauschgasführungen eingeleitet wird (einströmt). Als "Gassammelbereich" wird hier insbesondere ein Bereich (Austrittsport) bezeichnet, in welchem das aus den Wärmetauschgasführungen herausströmende Gas eingeleitet und gesammelt wird, bevor es über den jeweiligen Gasauslass aus der Gasseite des Gas-Gas-Wärmetauschers herausgeleitet wird (herausströmt) und diese verlässt. Durch die Aufteilung auf mehrere Wärmetauschgasführungen wird die Oberfläche vergrößert und damit der Wärmeübergang verbessert. Die Anzahl der Mehrzahl hängt von der Ausführungsform ab. Ist diese beispielweise plattenförmig (Plattenwärmetauscher), so sind 10 bis 25 Wärmetauschgasführungen üblich. Ist die Ausführungsform beispielsweise rohrförmig (Rohrbündelwärmetauscher) sind eher 20 bis 250 Wärmetauschgasführungen üblich. Der Fachmann wird die Anzahl der Mehrzahl also nach den im Stand der Technik üblichen Bauformen wählen. Die ersten Wärmetauschgasführungen sind mit der zweiten Gasseite im thermischen Kontakt. Hierdurch kann der Wärmeübertrag erfolgen. Erfindungsgemäß ist im ersten Gassammelbereich wenigstens ein erstes elektrisches Heizelement angeordnet. Im Regelbetrieb ist das erste elektrische Heizelement ausgeschaltet. Lediglich bei Hochfahren aus dem kalten Zustand wird hierdurch erwärmt. Die Anordnung ist derart gewählt, dass das Gas zunächst durch die erste Gasseite strömt, dort am Ende elektrisch erwärmt wird, von dort in einen Umsetzungsreaktor geführt wird. Dort findet jedoch aufgrund der zu geringen Temperatur noch keine Reaktion statt. Das Gas strömt dann wieder in den Gas-Gas-Wärmetauscher, dieses Mal auf der zweiten Gasseite. Hier gibt das Gas die elektrisch erzeugte Wärme auf den einfließenden Gasstrom der ersten Gasseite ab, welcher anschließend am Ende der ersten Gasseite dann nach der Erwärmung durch das rückströmende Gas weiter elektrisch durch das erste elektrische Heizelement weiter erwärmt und damit auf eine höhere Temperatur gebracht wird. Auf diese Weise wird sowohl der Gasstrom als auch der Umsetzungsreaktor kontinuierlich erwärmt, bis eine Schwelltemperatur erreicht ist, beispielsweise 370 °C bei der Ammoniaksynthese, sodass die Reaktion im Umsetzungsreaktor beginnt und zusätzliche Energie erzeugt. Ab diesem Zeitpunkt ist das System nicht mehr auf die Zufuhr externer Energie durch das erste elektrische Heizelement angewiesen. Das erste elektrische Heizelement kann entweder vollständig abgeschaltet werden oder langsam bis zum Erreichen der Zieltemperatur runtergeregelt werden.

Durch die Anordnung im Gas-Gas-Wärmetauscher wird weder ein eigenes druckstabiles Gehäuse benötigt, noch wird im Konverter der Platz für den Katalysator reduziert, sodass die aus dem Stand der Technik bekannten Probleme hierdurch gelöst werden können.

**In** einer weiteren Ausführungsform der Erfindung weist der erste Gassammelbereich einen ersten Teilbereich und einen zweiten Teilbereich auf. Der erste Teilbereich ist mit den ersten Wärmetauschgasführungen verbunden und der zweite Teilbereich ist mit dem ersten Gasauslass verbunden. Das erste elektrische Heizelement ist im zweiten Teilbereich angeordnet ist. Der Effekt ist, dass das Gas auf der ersten Gasseite im ersten Teilbereich in etwa die Temperatur des in die zweite Gasseite einströmenden Gases aufweist und diese in einem getrennten zweiten Teilbereich weiter erhöht wird. Dieses erlaubt beispielsweise auch die Entnahme von Gasströmen auf zwei unterschiedlichen Temperaturniveaus.

**In** einer weiteren Ausführungsform der Erfindung ist der zweite Teilbereich gegen die zweite Gasseite thermisch isoliert. Hierdurch wird verhindert, dass das in die zweite Gasseite eintretende heißere Gas durch das erste elektrische Heizelement weiter erwärmt wird. Die Erwärmung durch das erste elektrische Heizelement wird somit auf das kältere Gas der ersten Gasseite beschränkt. Beispielsweise kann die thermische Isolation des zweiten Teilbereichs durch ein Doppelrohr erreicht werden, sofern der zweite Teilbereich rohrförmig ausgebildet ist. Der Zwischenraum im Doppelrohr wirkt dann als Isolation und verhindert, dass Wärme, welche von dem ersten elektrischen Heizelement erzeugt wird, auf die zweite Gasseite abgegeben wird.

**In** einer weiteren Ausführungsform der Erfindung weist die erste Gasseite einen dritten Gasauslass auf. Der dritte Gasauslass ist mit dem ersten Gassammelbereich verbunden. Dieses ist insbesondere bevorzugt, wenn der erste Gassammelbereich unterschiedliche Temperaturniveaus aufweist. Insbesondere lassen sich auf diese Weise aus zwei Gasströmen - einem wärmeren Gasstrom und einem kälteren Gasstrom - drei Gasströme mit unterschiedlichen Temperaturen erhalten, einen abgekühlten ursprünglich wärmeren Gasstrom, einen auf eine niedrigere Temperatur erwärmten ursprünglich kälteren Gasstrom und einen auf eine höhere Temperatur erwärmten ursprünglich kälteren Gasstrom.

**In** einer weiteren Ausführungsform der Erfindung ist der dritte Gasauslass verschließbar. Besonders bevorzugt ist der dritte Gasauslass im Regelbetrieb verschlossen und wird nur in einer bestimmten Phase des Anfahrvorgangs geöffnet. Insbesondere ist der dritte Gasauslass mit einem Ventil verschließbar.

**In** einer weiteren Ausführungsform der Erfindung ist der dritte Gasauslass mit dem ersten Teilbereich verbunden.

**In** einer weiteren Ausführungsform der Erfindung ist in dem ersten Teilbereich ein zweites elektrisches Heizelement angeordnet. Insbesondere lässt sich ein solches zweites elektrisches Heizelement zur Temperaturfeinregulierung eines Gasstroms einsetzen, etwa des auf eine niedrigere Temperatur erwärmten ursprünglich kälteren Gasstroms.

**In** einer weiteren Ausführungsform der Erfindung ist der Ammoniaksynthese-Gas-Gas-Wärmetauscher als Plattenwärmetauscher ausgeführt. **In** dieser Ausführungsform weist die zweite Gasseite einen mit dem zweiten Gaseinlass verbundenen zweiten Gasverteilbereich und einen mit dem zweiten Gasauslass verbundenen zweiten Gassammelbereich auf. Der zweite Gasverteilbereich und der zweite Gassammelbereich sind über eine Mehrzahl an zweiten Wärmetauschgasführungen miteinander verbunden.

Erste Wärmetauschgasführungen und zweite Wärmetauschgasführungen sind jeweils alternierend nebeneinander flächig aneinander angrenzend angeordnet.

In einer weiteren alternativen Ausführungsform der Erfindung ist der Ammoniaksynthese-Gas-Gas-Wärmetauscher als Rohrbündelwärmetauscher ausgeführt. Hierbei gibt es zwei weitere wichtige alternative Ausführungsformen. Die zweite Gasseite kann in einer ersten beispielhaften Ausführungsform als ein großer durchgängiger Bereich ausgeführt sein, in welchem die rohförmigen ersten Wärmetauschgasführungen verlaufen und vom Gas der zweiten Gasseite umspült werden. Die zweite Gasseite kann in einer zweiten beispielhaften Ausführungsform einen mit dem zweiten Gaseinlass verbundenen zweiten Gasverteilbereich und einen mit dem zweiten Gasauslass verbundenen zweiten Gassammelbereich aufweisen. Der zweite Gasverteilbereich und der zweite Gassammelbereich sind über eine Mehrzahl an zweiten Wärmetauschgasführungen miteinander verbunden. Erste Wärmetauschgasführungen und zweite Wärmetauschgasführungen sind jeweils parallel nebeneinander angeordnet.

Bevorzugt wird die zweite Gasseite im Bereich der ersten Wärmetauschgasführungen in der der Gasführung in den ersten Wärmetauschgasführungen entgegengesetzten Richtung durchströmt (Gegenstromwärmetauscher).

In einer weiteren Ausführungsform der Erfindung weist der Ammoniaksynthese-Gas-Gas-Wärmetauscher ein Druckgehäuse auf. Als "Druckgehäuse" werden insbesondere Gehäuse für Anlagen oder Anlagenteile verstanden, welche aufgrund ihrer Konstruktion (beispielsweise durch Wahl eines geeigneten Materials von geeigneter Stärke und einer geeigneten Ausgestaltung) geeignet sind, einer Druckdifferenz von mindestens 80 bar zwischen einem höheren Innendruck und einem niedrigeren Außendruck standhalten zu können, bevorzugt von mindestens 100 bar.

In einem weiteren Aspekt betrifft die Erfindung eine Chemieanlage mit einem erfindungsgemäßen Ammoniaksynthese-Gas-Gas-Wärmetauscher. Die Chemieanlage weist einen Umsetzungsreaktor auf. Der Umsetzungsreaktor weist einen Edukteingang und einen Produktausgang auf. Der erste Gasauslass ist mit dem Edukteingang verbunden und der Produktausgang ist mit dem zweiten Gaseinlass verbunden.

Besonders bevorzugt ist die Chemieanlage eine Ammoniaksynthesevorrichtung und der Umsetzungsreaktor ist ein Konverter. Der erfindungsgemäße Gas-Gas-Wärmetauscher (Ammoniaksynthese-Gas-Gas-Wärmetauscher) ist somit im Rezirkulationskreis der Ammoniaksynthese integriert.

In einer weiteren Ausführungsform der Erfindung weist der Umsetzungsreaktor einen ersten Teilreaktor und einen zweiten Teilreaktor auf. Zwischen dem ersten Teilreaktor und dem zweiten Teilreaktor ist ein Nebenedukteinlass angeordnet. Der dritte Gasauslass ist mit dem Nebenedukteinlass verbunden. Somit kann insbesondere ein weniger vorgewärmtes Gas den durch die anspringende Reaktion erwärmten Gasstrom abkühlen. Dadurch steht die vollständige elektrische Heizleistung für die erste Reaktionsstufe im ersten Teilreaktor zu Verfügung und der zweite Teilreaktor wird mit der beginnenden Reaktionswärme aus dem ersten Teilreaktor erwärmt.

In einem weiteren Aspekt betrifft die Erfindung ein Verfahren zum Anfahren einer erfindungsgemäßen Chemieanlage. Das Verfahren umfasst die folgenden Schritte:
a) Einleiten von kaltem Eduktgasgemisch in den ersten Gaseinlass,
b) Erwärmen des Eduktgasgemisches mit der ersten elektrischen Heizung,
c) Erfassen der Temperatur im Umsetzungsreaktor und/oder des den Produktausgang verlassenen Produktgasgemisches,
d) Ermitteln des Beginns der chemischen Umsetzung im Umsetzungsreaktor anhand der in Schritt c) erfassten Temperatur,
e) Nach dem Beginn der chemischen Umsetzung Reduktion der Heizleistung der ersten elektrischen Heizung.

Das Erfassen in Schritt c) kann hierbei direkt oder indirekt erfolgen. Beispielsweise kann hier auch die in einem weiteren Wärmetauscher abgegebene Wärme beispielsweise über die Temperatur des Wärmetauschmediums erfasst werden.

In einer weiteren Ausführungsform der Erfindung ist das Verfahren ein Verfahren zum Anfahren der zuvor genannten Chemieanlage mit einem ersten Teilreaktor und einem zweiten Teilreaktor, welches zusätzlich die folgenden Schritte zwischen Schritt d) und Schritt e) aufweist:
f) Öffnen der Verbindung zwischen dem dritten Gasauslass und dem Nebenedukteinlass,
g) Ermitteln des Beginns der chemischen Umsetzung im zweiten Teilreaktor des Umsetzungsreaktors anhand der in Schritt c) erfassten Temperatur,
h) Nach dem Beginn der chemischen Umsetzung im zweiten Teilreaktor Trennen der Verbindung zwischen dem dritten Gasauslass und dem Nebenedukteinlass.

In einer weiteren Ausführungsform der Erfindung wird in Schritt d) der anteilige Beginn der Umsetzung ermittelt und entsprechend wird anteilig die Heizleistung der ersten elektrischen Heizung reduziert. Vorteil hiervon ist, dass zum einen ein möglichst schnelles Aufheizen auf Betriebstemperatur möglich ist, zum anderen aber ein Überschwingen der Temperatur verhindert werden kann. Dieses ist besonders wichtig, da eine erhöhte Temperatur das Gleichgewicht bei der Ammoniaksynthese auf die Seite der Edukte verschiebt und zu hohe Temperaturen zu Materialschaden führen.

Nachfolgend ist der erfindungsgemäße Ammoniaksynthese-Gas-Gas-Wärmetauscher anhand von in den Zeichnungen dargestellten Ausführungsbeispielen näher erläutert. Es zeigt
Fig. 1 eine erste beispielhafte Ausführungsform,
Fig. 2 eine zweite beispielhafte Ausführungsform,
Fig. 3 eine dritte beispielhafte Ausführungsform,
Fig. 4 eine vierte beispielhafte Ausführungsform und
Fig. 5 eine fünfte beispielhafte Ausführungsform.

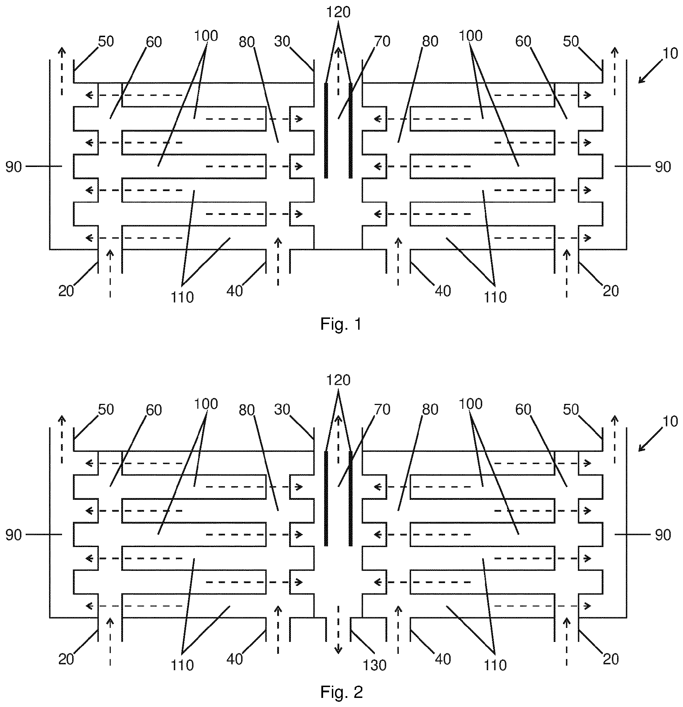

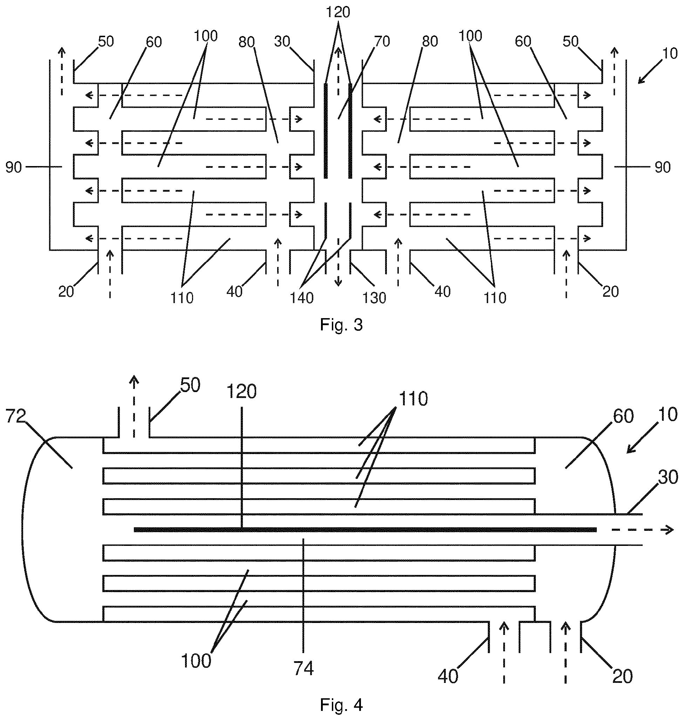

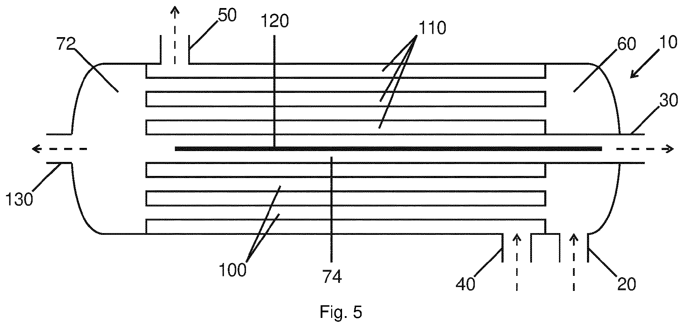

In den Fig. 1, Fig. 2 und Fig. 3 sind drei beispielhafte Plattenwärmetauscher gezeigt, in den Fig. 4 und Fig. 5 sind zwei beispielhafte Rohbündelwärmetauscher gezeigt. Gleiche Teile sind daher mit gleichen Bezugszeichen versehen
In Fig. 1 ist eine erste beispielhafte Ausführungsform des erfindungsgemäßen Ammoniaksynthese-Gas-Gas-Wärmetauschers 10 gezeigt. Durch den ersten Gaseinlass 20, welcher im gezeigten spiegelsymmetrischen Aufbau zweimal vorhanden ist, strömt das Gasgemisch ein. Dieses ist gerade beim Anfahren der Anlage noch kalt. Von dort gelangt das Gasgemisch in den ersten Gasverteilbereich 60 und wird dort auf die ersten Wärmetauschgasführungen 100 (hier beispielhaft drei gezeigt) verteilt. Die ersten Wärmetauschgasführungen 100 sind im gezeigten Beispiel plattenförmig. Im Regelbetrieb wird das Gasgemisch hier durch das im Gegenstrom in den zweiten Wärmetauschgasführungen 110 erwärmt. Beim Anfahren ist jedoch auch das Gas auf der zweiten Gasseite noch kalt, sodass hier keine oder eine nur geringe Erwärmung beim Anfahren erfolgt. Anschließend gelangt das Gasgemisch in den ersten Gassammelbereich 70 und wird hier mittels des ersten elektrischen Heizelements 120 erwärmt. Im Regelbetrieb ist das erste elektrische Heizelement 120 ausgeschaltet. Das erwärmte Gasgemisch wird über den ersten Gasauslass 30 abgegeben und in einen nicht gezeigten Umsetzungsreaktor, beispielsweise einen Konverter zu Ammoniaksynthese, überführt. Das aus dem Umsetzungsreaktor kommende Gasgemisch, welches im Regelbetrieb durch die dort stattfindende Reaktion wärmer ist als das dem Gas-Gas-Wärmetauscher 10 zuströmende Gasgemisch, wird durch den zweiten Gaseinlass 40 wieder in den Gas-Gas-Wärmetauscher 10 zurückgeführt. Vom zweiten Gaseinlass 40 gelangt das Gasgemisch in den zweiten Gasverteilbereich 80 und von dort in die zweiten Wärmetauschgasführungen 110, im gezeigten Beispiel vier plattenförmige Wärmetauschgasführung 110. Die ersten Wärmetauschgasführungen 100 und die zweiten Wärmetauschgasführungen 110 sind alternierend angeordnet. Von den zweiten Wärmetauschgasführungen 110 gelangt das Gasgemisch denn in den zweiter Gassammelbereich 90 und wird von dort über den zweiter Gasauslass 50 abgegeben.

Die zweite beispielhafte Ausführungsform, welche in Fig. 2 gezeigt ist, unterscheidet sich von der ersten beispielhafte Ausführungsform durch einen dritten Gasauslass 130 am erster Gassammelbereich 70 angeordnet ist. Daher kann man den ersten Gassammelbereich 70 gedanklich in einen ersten Teilbereich (unten, angrenzend an den dritten Gasauslass 130) und einen zweiten Teilbereich (oben, angrenzend an den ersten Gasauslass 30, mit dem ersten elektrischen Heizelement 120) teilen. Die in Fig. 3 gezeigte dritte beispielhafte Ausführungsform unterscheidet sich dadurch, dass in diesem gedanklichen ersten Teilbereich ein zweites elektrischen Heizelement 140 angeordnet ist.

In Fig. 4 ist eine vierte beispielhafte Ausführungsform des erfindungsgemäßen Ammoniaksynthese-Gas-Gas-Wärmetauschers 10 gezeigt. Durch den ersten Gaseinlass 20 strömt das Gasgemisch ein. Dieses ist gerade beim Anfahren der Anlage noch kalt. Von dort gelangt das Gasgemisch in den ersten Gasverteilbereich 60 und wird dort auf die ersten Wärmetauschgasführungen 100 (hier beispielhaft vier gezeigt) verteilt. Die ersten Wärmetauschgasführungen 100 sind im gezeigten Beispiel rohrförmig. Im Regelbetrieb wird das Gasgemisch hier durch das im Gegenstrom in den zweiten Wärmetauschgasführungen 110 erwärmt. Beim Anfahren ist jedoch auch das Gas auf der zweiten Gasseite noch kalt, sodass hier keine oder eine nur geringe Erwärmung beim Anfahren erfolgt. Anschließend gelangt das Gasgemisch in den ersten Teilbereich 72 des ersten Gassammelbereich 70 (in Fig. 4 und Fig. 5 gesondert gekennzeichnet). Von dort gelangt das Gasgemisch in den zweiten Teilbereich 74 des ersten Gassammelbereichs 70. In dem zweiten Teilbereich 74 ist das erste elektrische Heizelement 120 angeordnet, welches den Gasstrom erwärmt. Im Regelbetrieb ist das erste elektrische Heizelement 120 ausgeschaltet. Das erwärmte Gasgemisch wird über den ersten Gasauslass 30 abgegeben und in einen nicht gezeigten Umsetzungsreaktor, beispielsweise einen Konverter zu Ammoniaksynthese, überführt. Das aus dem Umsetzungsreaktor kommende Gasgemisch, welches im Regelbetrieb durch die dort stattfindende Reaktion wärmer ist als das dem Gas-Gas-Wärmetauscher 10 zuströmende Gasgemisch, wird durch den zweiten Gaseinlass 40 wieder in den Gas-Gas-Wärmetauscher 10 zurückgeführt. Vom zweiten Gaseinlass 40 gelangt das Gasgemisch in die zweiten Wärmetauschgasführungen 110, im gezeigten Beispiel eine rohrförmige zweite Wärmetauschgasführung 110, in welcher die (im gezeigten Querschnitt vier) ersten rohrförmigen Wärmetauschgasführungen 100 angeordnet sind. Hierdurch ist ein Wärmeübertrag über alle Wandflächen der ersten Wärmetauschgasführungen 100 in die zweite Wärmetauschgasführung 110 möglich. Von den zweiten Wärmetauschgasführungen 110 gelangt das Gasgemisch denn zum zweiten Gasauslass 50 und wird dort abgegeben.

Die in Fig. 5 gezeigte fünfte beispielhafte Ausführungsform unterscheidet sich von der vierten beispielhafte Ausführungsform dadurch, dass im ersten Teilbereich 72 ein dritter Gasauslass 130 angeordnet ist.

### Bezugszeichen

- 10: Ammoniaksynthese-Gas-Gas-Wärmetauscher
- 20: erster Gaseinlass
- 30: erster Gasauslass
- 40: zweiter Gaseinlass
- 50: zweiter Gasauslass
- 60: erster Gasverteilbereich
- 70: erster Gassammelbereich
- 72: erster Teilbereich
- 74: zweiter Teilbereich
- 80: zweiter Gasverteilbereich
- 90: zweiter Gassammelbereich
- 100: erste Wärmetauschgasführung
- 110: zweite Wärmetauschgasführung
- 120: erstes elektrisches Heizelement
- 130: dritter Gasauslass
- 140: zweites elektrisches Heizelement

## Patentansprüche

1. Ammoniaksynthese-Gas-Gas-Wärmetauscher (10), wobei der Ammoniaksynthese-Gas-Gas-Wärmetauscher (10) eine erste Gasseite und eine zweite Gasseite aufweist, wobei die erste Gasseite einen ersten Gaseinlass (20) und einen ersten Gasauslass (30) aufweist, wobei die zweite Gasseite einen zweiten Gaseinlass (40) und einen zweiten Gasauslass (50) aufweist, wobei die erste Gasseite einen mit dem ersten Gaseinlass (20) verbundenen ersten Gasverteilbereich (60) aufweist, wobei die erste Gasseite einen mit dem ersten Gasauslass (30) verbundenen ersten Gassammelbereich (70) aufweist, wobei der erste Gasverteilbereich (60) und der erste Gassammelbereich (70) über eine Mehrzahl an ersten Wärmetauschgasführungen (100) miteinander verbunden sind, wobei die ersten Wärmetauschgasführungen (100) mit der zweiten Gasseite im thermischen Kontakt sind, **dadurch gekennzeichnet, dass** im ersten Gassammelbereich (70) wenigstens ein erstes elektrisches Heizelement (120) angeordnet ist.

2. Ammoniaksynthese-Gas-Gas-Wärmetauscher (10) nach Anspruch 1, **dadurch gekennzeichnet, dass** der erste Gassammelbereich (70) einen ersten Teilbereich (72) und einen zweiten Teilbereich (74) aufweist, wobei der erste Teilbereich (72) mit den ersten Wärmetauschgasführungen (100) verbunden ist und der zweite Teilbereich (74) mit dem ersten Gasauslass (30) verbunden ist, wobei das erste elektrische Heizelement (120) im zweiten Teilbereich (74) angeordnet ist.

3. Ammoniaksynthese-Gas-Gas-Wärmetauscher (10) nach einem der vorstehenden Ansprüche, **dadurch gekennzeichnet, dass** die erste Gasseite einen dritten Gasauslass (130) aufweist, wobei der dritte Gasauslass (130) mit dem ersten Gassammelbereich (70) verbunden ist.

4. Ammoniaksynthese-Gas-Gas-Wärmetauscher (10) nach Anspruch 3, **dadurch gekennzeichnet, dass** der dritte Gasauslass (130) verschließbar ist.

5. Ammoniaksynthese-Gas-Gas-Wärmetauscher (10) nach Anspruch 2 in Kombination mit einem der Ansprüche 3 bis 4, **dadurch gekennzeichnet, dass** der dritte Gasauslass (130) mit dem ersten Teilbereich (72) verbunden ist.

6. Ammoniaksynthese-Gas-Gas-Wärmetauscher (10) nach Anspruch 5, **dadurch gekennzeichnet, dass** in dem ersten Teilbereich (72) ein zweites elektrisches Heizelement (140) angeordnet ist.

7. Ammoniaksynthese-Gas-Gas-Wärmetauscher (10) nach einem der vorstehenden Ansprüche, **dadurch gekennzeichnet, dass** der Ammoniaksynthese-Gas-Gas-Wärmetauscher (10) als Plattenwärmetauscher ausgeführt ist.

8. Ammoniaksynthese-Gas-Gas-Wärmetauscher (10) nach einem der Ansprüche 1 bis 6, **dadurch gekennzeichnet, dass** der Ammoniaksynthese-Gas-Gas-Wärmetauscher (10) als Rohrbündelwärmetauscher ausgeführt ist.

9. Ammoniaksynthese-Gas-Gas-Wärmetauscher (10) nach einem der vorstehenden Ansprüche, **dadurch gekennzeichnet, dass** der Ammoniaksynthese-Gas-Gas-Wärmetauscher (10) ein Druckgehäuse aufweist.

10. Ammoniaksynthese-Gas-Gas-Wärmetauscher (10) nach einem der vorstehenden Ansprüche, **dadurch gekennzeichnet, dass** der zweite Teilbereich (74) gegen die zweite Gasseite thermisch isoliert ist.

11. Ammoniaksynthese-Gas-Gas-Wärmetauscher (10) nach Anspruch 10, **dadurch gekennzeichnet, dass** der zweite Teilbereich (74) in Form eines Doppelrohrs ausgeführt ist.

12. Chemieanlage mit einem Ammoniaksynthese-Gas-Gas-Wärmetauscher (10), nach einem der vorstehenden Ansprüche, wobei die Chemieanlage einen Umsetzungsreaktor aufweist, wobei der Umsetzungsreaktor einen Edukteingang und einen Produktausgang aufweist, wobei der erste Gasauslass (30) mit dem Edukteingang verbunden ist und der Produktausgang mit dem zweiten Gaseinlass (40) verbunden ist.

13. Chemieanlage nach Anspruch 12, **dadurch gekennzeichnet, dass** die Chemieanlage eine Ammoniaksynthesevorrichtung und der Umsetzungsreaktor ein Ammoniakkonverter ist.

14. Chemieanlage nach einem der Ansprüche 12 bis 13, **dadurch gekennzeichnet, dass** der Umsetzungsreaktor einen ersten Teilreaktor und einen zweiten Teilreaktor aufweist, wobei zwischen dem ersten Teilreaktor und dem zweiten Teilreaktor ein Nebenedukteinlass angeordnet ist, wobei der dritte Gasauslass (130) mit dem Nebenedukteinlass verbunden ist.

15. Verfahren zum Anfahren einer Chemieanlage nach einem der Ansprüche 12 bis 14, wobei das Verfahren die folgenden Schritte umfasst:
a) Einleiten von kaltem Eduktgasgemisch in den ersten Gaseinlass (20),
b) Erwärmen des Eduktgasgemisches mit der ersten elektrischen Heizung,
c) Erfassen der Temperatur im Umsetzungsreaktor und/oder des den Produktausgang verlassenen Produktgasgemisches,
d) Ermitteln des Beginns der chemischen Umsetzung im Umsetzungsreaktor anhand der in Schritt c) erfassten Temperatur,
e) Nach dem Beginn der chemischen Umsetzung Reduktion der Heizleistung der ersten elektrischen Heizung.

16. Verfahren nach Anspruch 15, **dadurch gekennzeichnet, dass** die Chemieanlage eine Chemieanlage nach Anspruch 14 ist und das Verfahren zusätzlich die folgenden Schritte zwischen Schritt d) und Schritt e) aufweist:
f) Öffnen der Verbindung zwischen dem dritten Gasauslass (130) und dem Nebenedukteinlass,
g) Ermitteln des Beginns der chemischen Umsetzung im zweiten Teilreaktor des Umsetzungsreaktors anhand der in Schritt c) erfassten Temperatur,
h) Nach dem Beginn der chemischen Umsetzung im zweiten Teilreaktor Trennen der Verbindung zwischen dem dritten Gasauslass (130) und dem Nebenedukteinlass.

17. Verfahren nach einem der Ansprüche 15 bis 16, **dadurch gekennzeichnet, dass** in Schritt d) der anteilige Beginn der Umsetzung ermittelt wird und entsprechend anteilig die Heizleistung der ersten elektrischen Heizung reduziert wird.

## Claims

1. An ammonia synthesis gas-gas heat exchanger (10), wherein the ammonia synthesis gas-gas heat exchanger (10) has a first gas side and a second gas side, wherein the first gas side has a first gas inlet (20) and a first gas outlet (30), wherein the second gas side has a second gas inlet (40) and a second gas outlet (50), wherein the first gas side has a first gas distribution region (60) connected to the first gas inlet (20), wherein the first gas side has a first gas collecting region (70) connected to the first gas outlet (30), wherein the first gas distribution region (60) and the first gas collecting region (70) are connected to one another via a plurality of first heat exchange gas ducts (100), wherein the first heat exchange gas ducts (100) are in thermal contact with the second gas side, **characterized in that** at least one first electric heating element (120) is arranged in the first gas collecting region (70).

2. The ammonia synthesis gas-gas heat exchanger (10) as claimed in claim 1, **characterized in that** the first gas collecting region (70) has a first subregion (72) and a second subregion (74), wherein the first subregion (72) is connected to the first heat exchange gas ducts (100), and the second subregion (74) is connected to the first gas outlet (30), wherein the first electric heating element (120) is arranged in the second subregion (74).

3. The ammonia synthesis gas-gas heat exchanger (10) as claimed in one of the preceding claims, **characterized in that** the first gas side has a third gas outlet (130), wherein the third gas outlet (130) is connected to the first gas collecting region (70).

4. The ammonia synthesis gas-gas heat exchanger (10) as claimed in claim 3, **characterized in that** the third gas outlet (130) is closable.

5. The ammonia synthesis gas-gas heat exchanger (10) as claimed in claim 2 in combination with one of claims 3 to 4, **characterized in that** the third gas outlet (130) is connected to the first subregion (72).

6. The ammonia synthesis gas-gas heat exchanger (10) as claimed in claim 5, **characterized in that** a second electric heating element (140) is arranged in the first subregion (72).

7. The ammonia synthesis gas-gas heat exchanger (10) as claimed in one of the preceding claims, **characterized in that** the ammonia synthesis gas-gas heat exchanger (10) is designed as a plate heat exchanger.

8. The ammonia synthesis gas-gas heat exchanger (10) as claimed in one of claims 1 to 6, **characterized in that** the ammonia synthesis gas-gas heat exchanger (10) is designed as a tube bundle heat exchanger.

9. The ammonia synthesis gas-gas heat exchanger (10) as claimed in one of the preceding claims, **characterized in that** the ammonia synthesis gas-gas heat exchanger (10) has a pressure housing.

10. The ammonia synthesis gas-gas heat exchanger (10) as claimed in one of the preceding claims, **characterized in that** the second subregion (74) is thermally insulated with respect to the second gas side.

11. The ammonia synthesis gas-gas heat exchanger (10) as claimed in claim 10**, characterized in that** the second subregion (74) is designed in the form of a double tube.

12. A chemical plant comprising an ammonia synthesis gas-gas heat exchanger (10) as claimed in one of the preceding claims, wherein the chemical plant has a conversion reactor, wherein the conversion reactor has a reactant inlet and a product outlet, wherein the first gas outlet (30) is connected to the reactant inlet, and the product outlet is connected to the second gas inlet (40).

13. The chemical plant as claimed in claim 12, **characterized in that** the chemical plant is an ammonia synthesis apparatus, and the conversion reactor is an ammonia converter.

14. The chemical plant as claimed in one of claims 12 to 13, **characterized in that** the conversion reactor has a first subreactor and a second subreactor, wherein a secondary reactant inlet is arranged between the first subreactor and the second subreactor, wherein the third gas outlet (130) is connected to the secondary reactant inlet.

15. A method for starting up a chemical plant as claimed in one of claims 12 to 14, wherein the method has the following steps:
a) introducing cold reactant gas mixture into the first gas inlet (20),
b) heating the reactant gas mixture by means of the first electric heater,
c) detecting the temperature in the conversion reactor and/or of the product gas mixture leaving the product outlet,
d) determining the start of chemical conversion in the conversion reactor from the temperature detected in step c),
e) reducing the heat output of the first electric heater after the start of chemical conversion.

16. The method as claimed in claim 15, **characterized in that** the chemical plant is a chemical plant as claimed in claim 14, and the method additionally comprises the following steps between step d) and step e):
f) opening the connection between the third gas outlet (130) and the secondary reactant inlet,
g) determining the start of chemical conversion in the second subreactor of the conversion reactor from the temperature detected in step c),
h) after the start of chemical conversion in the second subreactor, separating the connection between the third gas outlet (130) and the secondary reactant inlet.

17. The method as claimed in one of claims 15 to 16, **characterized in that**, in step d), the proportionate start of conversion is determined and the heat output of the first electric heater is reduced to a correspondingly proportionate extent.

## Revendications

1. Un échangeur de chaleur gaz-gaz pour la synthèse de l'ammoniac (10), dans lequel l'échangeur de chaleur gaz-gaz pour la synthèse de l'ammoniac (10) présente un premier côté gaz et un second côté gaz, dans lequel le premier côté gaz présente une première entrée de gaz (20) et une première sortie de gaz (30), dans lequel le second côté gaz présente une deuxième entrée de gaz (40) et une deuxième sortie de gaz (50), dans lequel le premier côté gaz présente une première zone de distribution de gaz (60) reliée à la première entrée de gaz (20), dans lequel le premier côté gaz présente une première zone de collecte de gaz (70) reliée à la première sortie de gaz (30), dans lequel la première zone de distribution de gaz (60) et la première zone de collecte de gaz (70) sont reliées l'une à l'autre par une pluralité de premiers conduits de gaz d'échange thermique (100), dans lequel les premiers conduits de gaz d'échange thermique (100) sont en contact thermique avec le second côté gaz, **caractérisé en ce qu'**au moins un premier élément chauffant électrique (120) est disposé dans la première zone de collecte de gaz (70).

2. L'échangeur de chaleur gaz-gaz pour la synthèse de l'ammoniac (10) selon la revendication 1, **caractérisé en ce que** la première zone de collecte de gaz (70) présente une première sous-zone (72) et une deuxième sous-zone (74), dans lequel la première sous-zone (72) est reliée aux premiers conduits de gaz d'échange thermique (100), et la deuxième sous-zone (74) est reliée à la première sortie de gaz (30), dans lequel le premier élément chauffant électrique (120) est disposé dans la deuxième sous-zone (74).

3. L'échangeur de chaleur gaz-gaz pour la synthèse de l'ammoniac (10) selon l'une quelconque des revendications précédentes, **caractérisé en ce que** le premier côté gaz présente une troisième sortie de gaz (130), dans lequel la troisième sortie de gaz (130) est reliée à la première zone de collecte de gaz (70).

4. L'échangeur de chaleur gaz-gaz pour la synthèse de l'ammoniac (10) selon la revendication 3, **caractérisé en ce que** la troisième sortie de gaz (130) peut être fermée.

5. L'échangeur de chaleur gaz-gaz pour la synthèse de l'ammoniac (10) selon la revendication 2 en combinaison avec l'une quelconque des revendications 3 à 4, **caractérisé en ce que** la troisième sortie de gaz (130) est reliée à la première sous-zone (72).

6. L'échangeur de chaleur gaz-gaz pour la synthèse de l'ammoniac (10) selon la revendication 5, **caractérisé en ce qu'**un deuxième élément chauffant électrique (140) est disposé dans la première sous-zone (72).

7. L'échangeur de chaleur gaz-gaz pour la synthèse de l'ammoniac (10) selon l'une quelconque des revendications précédentes, **caractérisé en ce que** l'échangeur de chaleur gaz-gaz pour la synthèse de l'ammoniac (10) est conçu sous la forme d'un échangeur de chaleur à plaques.

8. L'échangeur de chaleur gaz-gaz pour la synthèse de l'ammoniac (10) selon l'une quelconque des revendications 1 à 6, **caractérisé en ce que** l'échangeur de chaleur gaz-gaz pour la synthèse de l'ammoniac (10) est conçu sous la forme d'un échangeur de chaleur à faisceau tubulaire.

9. L'échangeur de chaleur gaz-gaz pour la synthèse de l'ammoniac (10) selon l'une quelconque des revendications précédentes, **caractérisé en ce que** l'échangeur de chaleur gaz-gaz pour la synthèse de l'ammoniac (10) présente une enveloppe sous pression.

10. L'échangeur de chaleur gaz-gaz pour la synthèse de l'ammoniac (10) selon l'une quelconque des revendications précédentes, **caractérisé en ce que** la deuxième sous-zone (74) est isolée thermiquement par rapport au second côté gaz.

11. L'échangeur de chaleur gaz-gaz pour la synthèse de l'ammoniac (10) selon la revendication 10, **caractérisé en ce que** la deuxième sous-zone (74) est conçue sous la forme d'un tube double.

12. Une installation chimique comprenant un échangeur de chaleur gaz-gaz pour la synthèse de l'ammoniac (10) selon l'une quelconque des revendications précédentes, dans laquelle l'installation chimique présente un réacteur de conversion, dans laquelle le réacteur de conversion présente une entrée de réactif et une sortie de produit, dans laquelle la première sortie de gaz (30) est reliée à l'entrée de réactif, et la sortie de produit est reliée à la deuxième entrée de gaz (40).

13. L'installation chimique selon la revendication 12, **caractérisée en ce que** l'installation chimique est une installation de synthèse de l'ammoniac et le réacteur de conversion est un convertisseur d'ammoniac.

14. L'installation chimique selon l'une quelconque des revendications 12 à 13, **caractérisée en ce que** le réacteur de conversion présente un premier sous-réacteur et un deuxième sous-réacteur, dans laquelle une entrée secondaire de réactif est disposée entre le premier sous-réacteur et le deuxième sous-réacteur, dans laquelle la troisième sortie de gaz (130) est reliée à l'entrée secondaire de réactif.

15. Un procédé de démarrage d'une installation chimique selon l'une quelconque des revendications 12 à 14, dans lequel le procédé comprend les étapes suivantes :
a) introduction d'un mélange gazeux de réactifs froid dans la première entrée de gaz (20),
b) chauffage du mélange gazeux de réactifs au moyen du premier élément chauffant électrique,
c) détection de la température dans le réacteur de conversion et/ou du mélange gazeux de produit quittant la sortie de produit,
d) détermination du début de la conversion chimique dans le réacteur de conversion à partir de la température détectée à l'étape c),
e) réduction de la puissance thermique du premier élément chauffant électrique après le début de la conversion chimique.

16. Le procédé selon la revendication 15, **caractérisé en ce que** l'installation chimique est une installation chimique selon la revendication 14 et **en ce que** le procédé comprend en outre les étapes suivantes entre l'étape d) et l'étape e) :
f) ouverture de la liaison entre la troisième sortie de gaz (130) et l'entrée secondaire de réactif,
g) détermination du début de la conversion chimique dans le deuxième sous-réacteur du réacteur de conversion à partir de la température détectée à l'étape c),
h) après le début de la conversion chimique dans le deuxième sous-réacteur, interruption de la liaison entre la troisième sortie de gaz (130) et l'entrée secondaire de réactif.

17. Le procédé selon l'une quelconque des revendications 15 à 16, **caractérisé en ce que**, à l'étape d), le début proportionnel de la conversion est déterminé et la puissance thermique du premier élément chauffant électrique est réduite dans une mesure proportionnelle correspondante.
